# EUROPEAN PATENT APPLICATION

(11) **EP 1 865 676 A1**
(43) Date of publication of application: **12.12.2007**
(21) Application number: 05736579.3
(22) Date of filing: 28.04.2005
(51) Int. Cl.: H04L 12/66

(54) **RELAY DEVICE, COMMUNICATION SYSTEM, AND CONTROL METHOD AND PROGRAM FOR THEM**

(30) Priority: 11.03.2005 JP 2005068806
(71) Applicant: AdIn Research, Inc., Tokyo 1020094 (JP)
(72) Inventor: NAKAMURA, Ken c/o AdIn Research, Inc., Tokyo 1020094 (JP); AOYAMA, Takeshige c/o AdIn Research, Inc., Tokyo 1020094 (JP); YAMAWAKI, Yuji c/o AdIn Research, Inc., Tokyo 1020094 (JP)
(74) Representative: Wise, Stephen James
(86) International application number: PCT/JP2005/008212
(87) International publication number: WO 2006/095451

(57) **Abstract**

Relay devices T are installed in opposition to each other across an FW to implement an FW traversal communication between communication addresses such as IP addresses. Each relay unit 11, 21, ... forwards and mediates a UDP communication performed with a communication address local to the FW beyond the FW by transmitting and receiving the DUP communication in a TCP simulated communication with a counter part relay device across the FW. Each call control unit 12, 22, ... forwards and mediates a call control message for a call in accordance with the IP telephone (such as SIP) between a communication terminal device C11, C31, C32 or the like local to the FW, or a predetermined call control server (for example, an SIP proxy server or the like), and a counterpart relay device installed in opposition across the firewall. The TCP simulated communication enables the implementation of the UDP communication beyond NAT irrespective of the type and setting of the firewall and NAT.

## Description

### TECHNICAL FIELD

The present invention relates to technologies for carrying out NAT traversal of UDP communications through TCP simulated communications, irrespective of the type and settings of firewall and NAT.

### BACKGROUND ART

### [Outline of IP Telephone]

In recent years, with developments of information processing and communication technologies centered on the Internet and personal computers, the IP telephone technology is rapidly becoming increasingly popular for purposes of effective utilization, integration, simplification of facilities, a reduction in cost, and the like. The IP telephone is a telephone which employs the IP (Internet Protocol) network for a connection line, and is centered on the VoIP technology. The VoIP is a technology for transmitting digitized packets through the IP network. Protocols typically used therein include SIP (Session Initiation Protocol) for controlling calls related to origination and termination, H.323, RTP (Real-time Transport Protocol) for transmitting speech packets in a streaming form, and the like.

For example, in a combination of SIP-based call control and RTP-based packet transmission, an SIP server exchanges call control messages with each of source and destination terminals to conduct call control such as the start, end and the like of a call in response to manipulations associated with origination, response, termination and the like on each of the terminals. In this event, each terminal uses a different port number for RTP-based speech packet transmission, other than a 5060 port for exchanging the call control messages. In this connection, RTP is generally used together with RTCP in a set.

Preliminarily, a transmission port and a reception port for use in speech packet transmission in this way are collectively called "speech ports. " Generally, in one call, two sets of opposing transmission ports and reception ports are preferably used for avoiding collisions of processing and smoothing transmissions/receptions, where one reception port for transmission and one reception port for reception may be determined for use by each terminal in accordance with previously set numerical values such as default, or on the fly from among several tens of thousands of free port numbers as appropriate. Their speech port numbers (transmission port number and reception port number) are transmitted to the respective partners by the SIP server in response to a call control message, while RTP-based speech packets are directly transmitted between the terminals without the intervention of the SIP server. It should be noted that in this application, the "terminal" is synonymous with a "terminal device."

### [NAT and Firewall]

Incidentally, when an attempt is made to use the IP telephone not only within a local LAN such as that within business premises but also through the Internet, a so-called NAT traversal (firewall traversal) problem arises. NAT (Network Address Translation) is a function for principally bidirectionally translating global IP addresses on the Internet assigned to organizations such as enterprises, schools, public institutions to/from private IP addresses used within LAN of each organization, and is implemented in ADSL or optical-fiber based modems and the like, together with a router function, or is practiced as a function of an independent dedicated firewall device and the like.

At the beginning, NAT was mainly intended for countermeasures to exhaustion of a limited number of global IP addresses due to the proliferation of the Internet, but in recent years, the importance has been placed on relationship to the firewall for ensuring the security because the security problem has been strongly recognized. The firewall (also called "FW" as the case may be) is a mechanism for protecting LANs against malicious unauthorized invasions and attacks from the internet which is utilized by an indefinite number of users. NAT per se has a firewall effect to certain degree. This is because private IP address and port numbers (also called "identification information" as the case may be) used by terminals such as personal computers and the like located within a LAN are converted to global IP addresses and different port numbers before they are presented to the Internet (also called "to WAN" as the case may be) to conceal the network configuration within the LAN, the number of terminals, identification information and the like to the outside.

In addition to the above, as the firewall, NAT ensures the security for the LAN through so-called packet filtering which prohibits or limits communications in accordance with the direction of communications (out-to-in or in-to-out), IP addresses, a range thereof, port numbers on the WAN and LAN side and a range thereof, other patterns and the like. In other words, the "firewall" used herein refers to a firewall in a broader sense which includes at least one of the packet filtering which is a firewall in a narrow sense, and NAT.

### [Details on NAT Traversal Problem]

When viewed from applications such as the IP telephone and the like, the NAT traversal problem is basically the same as firewall traversal which is a term used when NAT constitutes a firewall, router traversal and the like, and may be summarized as follows. Consider, for example, a scenario in which a source terminal notifies a destination terminal of identification information including a speech port number intended for use in RTP-based packet transmission through an SIP server in SIP-based call control. However, the identification information on the source terminal transmitted herein is exclusive only within a LAN associated with the source side, and is actually converted and corresponded to different one on the WAN side when it passes through FW. Specifically, since the speech port spontaneously declared by the terminal to the SIP server is converted to a different port on the WAN side, the declared identification information does not allow for communications from the outside such as the destination terminal to that speech port, and disables normal call control and calls.

In this connection, protocols in the IP communications are represented by (so-called connection type) TCP which involves acknowledgement of packets and the like, and (so-called connectionless type) UDP which involves nothing after transmission. The NAT traversal problem is more grave in UDP than in TCP. Originally, the TCP-based communications advantageously provides high reliability with the aide of arrival confirmation, re-transmission control, and congestion control, and is capable of communications in the reverse direction using a forward communication path (connection) with the existence of sessions. Accordingly, a large number of firewalls and NATs have functions and settings which accommodate such bi-directional communications for the TCP communications.

On the other hand, the TCP is disadvantageously unsuitable for audio and visual communications such as the aforementioned RTP and the like, due to its high processing loads caused by the arrival confirmation and the like, and difficulties encountered in continual communications at fixed intervals, so that UDP is employed for transmission of data which include such contents. Since UDP transmits packets in one direction without any subsequent supports and has a risk of packet loss, but is suitable for continuing to transmit data such as voices and images to keep the pace with a fixed bit rate. As such, in the IP telephone, for example, they are properly used in such a manner that the TCP is responsible for exchange of SIP-based call control messages, while the UDP is responsible for actual speech transmission based on RTP and the like. However, since the UDP essentially lacks for bi-directionality and symmetry, and a variety of types of NATs exist in its handling, as will be later described, the NAT traversal problem is more complicated than in the TCP

### [Solutions to NAT Traversal Problem]

While a variety of proposals have been made to the NAT traversal problem as described above (for example, JP-A-2004-523828), one solution is the utilization of STUN (Simple Traversal of UDP through NATs). Fig. 3 shows an exemplary utilization of STUN, where communication control lines for call control messages and the like based on SIR or the like are indicated by broken line (for example, port number 5060), data lines (for example, a port number 10000) for speech packets based on RTP or the like are indicated by solid lines, and flows of packets are indicated by one-dot chain lines for communications with an STUN server to identify WAN side identification information on terminals.

In this example, at the outset of or prior to SIP-based communications or the like, a source terminal installed in a private address space within FW2 transmits a communication packet (preliminarily called the "test packet") from a reception port and a transmission port intended for use in speech packet transmissions to a predetermined port number (for example, 5080) ofapredetermined STUN server installed in a global address space outside FW2 (one-dot chain line). In response, source identification information contained in a header of the testpacket is converted to one associated with the WAN by the NAT, and the STUN server receives and reads the converted WAN side identification information, and notifies the source terminal of the converted WAN side identification information by returning a response packet which contains the converted WAN side identification information in a main body instead of a header to the source terminal (one-dot chain line).

At this time, the source terminal can eventually acquire the WAN side identification information relevant to the transmission port and reception port of the terminal itself, and notifies the destination terminal of the WAN side identification information carried on a call control message through the SIP server (broken line), thereby allowing the destination terminal to know the WAN side identification information relevant to the speech ports of the source terminals. Though not shown, the same applies to the opposite direction, where the source terminal is allowed to know WAN side identification information relevant to speech ports of the destination terminal.

Next required is to force FW, which prevents communications to the respective terminals from the outside, to admit transmissions and receptions of packets between the speech ports of the respective terminals, i.e., from two opposing sets of transmission ports to the reception ports.

### [Type of NAT]

Here, when the effects of the firewall are expected, basic filtering conditions in the NAT are generally set to permit communications from the inside to the outside, but prohibit in principle communications from the outside to the inside in the first place. However, in the second place, when a communication is made from an IP address and a port of an internal terminal, an IP address and a port number on the WAN side are corresponded to the internal IP address and port number to open a route, permitting out-in communications in the opposite direction for a predetermined time (for example, several tens of seconds to several hundreds of seconds, or the like depending on particular security policies), if on the same route.

In this event, the following three types of NATs can be listed depending on the relationship with the external IP address and port of the destination in the original in-out communication, and a range in which the out-in communication is permitted in the opposite direction:
1. Full Cone NAT:
   External sources are not limited irrespective of the IP address and port number.
2. Restricted Cone NAT:
   External sources should present a consistent IP address with the port number laid aside.
3. Port-Restricted Cone NAT:
   External sources should present both the IP address and port number.
In these three types, communications from the same internal IP address and port number are commonly assigned to the same port number on the WAN side whichever external destination it is directed to.

### [UDP Hole Punching]

According to the filtering conditions as described above, transmissions from a transmission port to desired destinations are free without problem, where each terminal is only required to pass necessary communications from the outside to the reception port through FW. An approach for forcing FW to admit the arrival of necessary packets to a port is UDP hole punching.

This approach utilizes the fact that out-in communications are permitted at least from the same destination of in-out communications in the three types of NATs, and is performed in a certain set of reception port and transmission port in the following manner. First, as previously described, respective terminals are mutually aware of WAN side identification information on a reception port and a transmission port of the counterpart through STUN and SIP messages, so that each terminal transmits some packet from its own reception port to the transmission port of the counterpart. This packet is preliminarily called the "hole punching packet."

The hole punching packet must be transmitted on another occasion separately from the test packet unless the FW of the counterpart is Full Cone NAT. The transmission of the hole punching packet from the reception port of one terminal to the transmission port of the other is intended to enable out-in communications in the opposite direction to pass through the same route by once passing in-out communications. More specifically, by recording in the FW of the source terminal the in-out communication through the hole punching packet in the direction opposite to the essential one, i.e., from the reception port of the source terminal to the transmission port of the destination, a setting is temporarily set in the FW for passing speech packets in one piece in the out-in communication in the opposite direction, i.e., from the transmission port of the counterpart which is the destination of the hole punching packet to the reception port of the terminal which is the source of the hole punching packet.

Accordingly, when the FW of the counterpart is the Restricted Cone NAT or Port-Restricted Cone NAT, the hole punching packet is blocked by the FW of the counterpart, which however does not cause any problem. Because the hole punching packet is transmitted for the hole punching which can be performed only from the inside. It is a work performed from the destination terminal from the inside to punch a hole through the FW of the counterpart such that packets from the transmission port of the source terminal can access to the reception port of the counterpart.

When the foregoing hole punching is performed from the reception port in both two sets of opposing transmission ports and reception ports, packets such as RTP can be mutually received from the counterparts, thus establishing bidirectional speech transmissions.

### DISCLOSURE OF THE INVENTION

However, in the prior art as described above, a terminal must support STUN as well, in addition to a call control server such as SIP, burdens and conditions for introduction and operations are inconveniently complicated. Also, there is another type of NAT, which is Symmetric NAT, in addition to the aforementioned three types, and when any FW is this Symmetric NAT, the NAT traversal communications are disabled in the prior art which uses the hole punching.

Specifically, unlike the three types described above, in the Symmetric NAT, even communications from the same internal IP address and port number are assigned different port numbers on the WAN side if they differ in destination from one another. Therefore, when the FW of the source terminal is the Symmetric NAT, a WAN side port number associated with a packet transmission to STUN is different from a WAN side port number associated with a hole punching packet transmission even if they are from the same speech port when viewed from the terminal.

This means that the WAN side port number conveyed to the counterpart through the STUN and SIP server is different from an actually hole punched WAN side port number, with the result that RTP-based packets of speech and the like from the counterpart is continuously blocked by the FW of the source terminal to result in a uni-direction speech state in which the speech of the counterpart cannot be heard.

In other words, any of the prior art techniques as described above has a problem in that the NAT traversal is hampered in the UDP communications depending on the type and settings of firewall and NAT.

The present invention is intended to solve the problems of the prior art as described above, and it is an object of the invention to carry out the NAT traversal in the UDP communications through TCP simulated communications irrespective of the type and setting of firewall and NAT.

To achieve the above objects, in one aspect of the present invention, a relay device (a control method or a control program therefor) comprises a connection with a communication network, and a control unit for performing information processing including a communication through the connection, wherein a pair of the relay devices are installed in opposition to each other across a firewall to carry out a firewall traversal communication between communication addresses. The relay device is characterized by implementing relay means (processing) for forwarding and mediating a UDP communication performed with a communication address local to the firewall by the action of the control unit by transmitting and receiving the UDP communication in a TCP simulated communication with a counterpart relay device across the firewall.

In another aspect of the present invention, a communication system (a control method or a control program therefor) has the relay devices in each of the aspects inside and outside a firewall. The system is characterized in that the relay device inside the firewall forwards and mediates a UDP communication performed with a communication address within the firewall beyond the firewall by the action of the relay means thereof by transmitting and receiving the UDP communication in a TCP simulated communication with the relay device outside the firewall, and the relay device outside the firewall forwards and mediates a UDP communication performed with a communication address outside the firewall beyond the firewall by the action of the relay means thereof by transmitting and receiving the UDP communication in a TCP simulated communication with the relay device outside the firewall.

In another aspect of the present invention, a communication system (a control method or a control program therefor) has the communication system in the aspect described above for each firewall associated with both ends of a communication. The system is characterized in that each of the relay devices inside each of the firewalls forwards and mediates a UDP communication performed by a communication terminal device located inside each of the firewalls beyond the firewall by the action of the relay means (processing) thereof by transmitting and receiving the UDP communication in a TCP simulated communication with each of the opposing relay devices outside each of the firewalls, and each of the relay devices outside each of the firewalls forwards and mediates the UDP communication beyond each of the firewalls by the action of the relay means (processing) thereof by transmitting and receiving the UDP communication in a TCP simulated communication with the relay device inside each of the firewalls, and forwards and mediates the UDP communication with the relay device outside the other firewall associated with the other end of the communication through a UDP communication packet.

As described above, by forwarding and mediating UDP communications such as VoIP and the like between devices provided inside and outside a firewall thereacross in a TCP simulated communication, easy and secure NAT traversal can be carried out irrespective of the type and setting of firewall and NAT without the need to support a special protocol in communication terminal devices for the IP telephone and the like. The TCP simulated communication simulates (displays or camouflage) a connection of a TCP session for a firewall by displaying TCP as a protocol type in the form of a protocol number, a port number or the like of an IP header or a TCP header, using a format of a TCP packet, or the like, but actually, packets which records a data section of a UDP communication are sent for forwarding without any subsequent support, without performing an arrival confirmation through a reception confirmation response (ACK) particular to TCP, a re-transmission control through issuance of a re-transmission request and a response, or a congestion control.

In another aspect of the present invention, the relay device (control method or control program therefor) of the aspect described above is characterized by implementing call control means (processing) for forwarding and mediating a call control message for a call in accordance with an IP telephone by the action of the control unit, between a communication terminal device local to the firewall or a predetermined call control server, and a counterpart relay device installed in opposition across the firewall.

In this way, a pair of relay devices across an FW forward and mediate call control messages between a communication terminal within the FW and a call control server outside the FW through a normal TCP communication and the like, and speech packets of UDP such as RTP are sent beyond the FW through a TCP simulated communication, thereby making it possible to readily utilize the IP telephone without fail, irrespective of the type and setting of the firewall and NAT.

According to the present invention, the NAT traversal of UDP communication can be carried out through a TCP simulated communication, irrespective of the type and setting of the firewall and NAT. Other objects, features, and advantages of the present invention will be more apparent from the following description of embodiments of the present invention.

### BRIEF DESCRIPTION OF THE DRAWINGS

[Fig. 1]
   A functional block diagram showing the configuration of an embodiment of the present invention.
[Fig. 2]
   A diagram showing the configuration of another embodiment of the present invention.
[Fig. 3]
   A diagram showing an exemplary conventional IP telephone. BEST MODE FOR CARRYING OUT THE INVENTION

Next, the most preferred embodiment for carrying out the invention will be described with reference to the drawings . However, repeated descriptions will not be made on premised matters which have been described in PRIOR ART and PROBLEM and are common to the present invention.

### [1. Configuration]

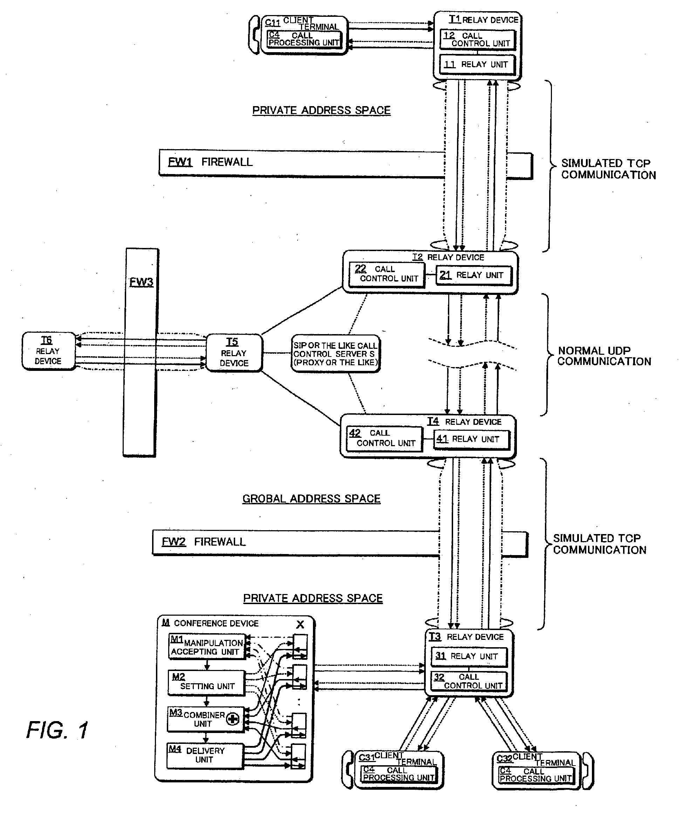

As illustrated in a configuration diagram of Fig. 1, an embodiment relates to a communication system for implementing IP calls among communication terminal devices C (C11, C31, C32, C33) for IP calls using one set each of relay devices T1 and T2, T3 and T4 provided across respective FW1, FW2, respectively, and can be regarded as a control method and a control program therefor.

While Fig. 1 focuses a one-to-one communication between FW1 and FW2 in the illustration, the FWs and relay devices are not limited to two pairs, but may be in a star configuration which additionally comprises a third FW3, relay devices T5, T6, and yet further FWs. Also, if there is a Layer 3 switch associated with a re-transmission procedure and the like of TCP on a path, malfunctions, increased communication loads and the like can be caused by a reception confirmation response (ACK) which is unintentionally returned halfway on the path, so that each relay device should be disposed in close proximity across the FW.

### [1-1. Relay Device]

A minimum unit which form part of the feature of the embodiment described above is an individual relay device. Each device shown in Fig. 1, including each relay device, comprises common components, though not shown, which include a connection with a communication network (for example, a wired or a wireless network board, a network card or the like), and a control unit such as a CPU for processing information, including a communication control through the connection.

Then, the respective relay devices T (T1-T6) are installed across the FWs in combination such as T1 and T2; T3 and T4; and T5 and T6, thereby implementing an FW traversal communication between communication addresses such as IP addresses. Such an individual relay device T implements functions of a relay unit (11, 12, ...) and a call control unit (12, 22, ...) through the control unit and a predetermined program. Among them, each relay device 11, ... transmits and receive UDP communications with communication addresses local to the FW through TCP simulated communications with a counterpart relay device across the FW, thereby providing relaying means for forwarding and mediation beyond the FW.

The call control unit 12 of each relay device T in turn is call control means for forwarding and mediating a call control message in accordance with SIP or the like for an IP telephone based call between the communication terminal devices C11, C31, C32 local to the FW or a predetermined call control server (for example, an SIP proxy server or the like) S and a counterpart relay device installed in opposition across the FW.

### [1.2 Terminal Device]

The terminal C (C11, C31, C32, C33) in turn is a terminal device for IP call which is installed in each FW for placing FW traversal calls. Though not shown, the terminal C comprises manipulation means such as dial buttons, a hook button and the like, call transmitting means such as a microphone and the like, and call receiving means such as a speaker and the like, in addition to the connection unit and control unit. Then, each terminal C implements functions of a call processing unit C4 in the form of program, where the call processing unit C4 is call processing means for conducting control and processing for calls based on the IP telephone, including communications by way of the connection unit as well as encoding and decoding of speech.

In the figures except for within the conference device M, arrows include broken line arrows which indicate flows of call control information in accordance with SIP or the like, and solid lines which mean flows of speech packets in accordance with RTP or the like.

### [1-3. Conference Device]

A conference device M in turn mediates a connection of three or more parties among a plurality of terminals for mediating calls, where arrows within the conference device M have meanings different from the aforementioned, where a broken line indicates control, a one-dot chain line indicates acceptance of a manipulation, a thin solid line indicates an uplink speech, and a bold solid line indicates a downlink speech in a relationship with a connection X with each terminal represented by a rectangle on a right side within the conference device M.

More specifically, the conference device M comprises the connection unit and control unit, where the control unit implements respective functions of a manipulation accepting unit M1, a setting unit M2, a combiner unit M3, and a delivery unit M4. Among these units, the manipulation accepting unit M1 is manipulation accepting means for accepting manipulations from each terminal; the setting unit M2 is a setting means for setting a speech packet transmission path with each terminal; the combiner unit M3 is combining means for combining speeches from respective terminals for conference; and the delivery unitM4 is delivering means for delivering a combined speech to each terminal. It should be noted that the conference device Mmaybasicallybehave as one type of terminal in a relationship with the relay device T3, and that while only one is shown in FW2 in the drawing, any number of conference devices may be installed anywhere.

### [2. Actions and Effects]

The embodiment as described above works in the following manner.

### [2-1. Actions of Set of Relay Devices across FW]

First, the individual relay device as described above can be regarded as a communication system which is composed of each pair of the relay devices provided inside and outside the FW. In this event, the relay device inside the FW forwards and mediates UDP communications performed with communication addresses within the FW by the action of its relay unit (relay means) by transmitting and receiving them in TCP simulated communications with the relay device outside the FW. On the other hand, the relay device outside the FW, corresponding thereto, forwards and mediates UDP communications performed with communication addresses outside the FW by the action of its relay unit (relay means) by transmitting and receiving them in TCP simulated communications with the relay device inside the FW.

### [2.2 FW Traversal at Both Ends of Communication]

Considering in the example of Fig. 1 an example in which a call is made through the IP telephone between a certain communication terminal (for example, C11) within the FW 1 and communication terminals (for example, C31, C32) within the other FW 2, a higher generic communication system can be contemplated as a whole by providing a communication system which comprises a pair of relay devices inside and outside each of the FW1, FW2, as described above, at both ends of the communication, respectively.

In this event, the relay device T1 inside the FW 1 forwards and mediates, beyond the FW 1, a UDP communication performed by the communication terminal device C11 located inside the FW1 by its relay unit 11 by transmitting and receiving the UDP communication in a TCP simulated communication with the counterpart relay device T2 outside the FW 1. Corresponding thereto, the relay device T2 outside the FW1 forwards and mediates, beyond the FW 1, the UDP communication by the action of its relay unit 21 by transmitting and receiving the UDP communication in a TCP simulated communication with the relay device T1 inside the FW 1, and also forwards and mediates the UDP communication with the relay device T4 outside the other FW 2 associated with the other end side of the communication through normal UDP communication packets.

Likewise, the relay device T3 inside the FW 2 forwards and mediates, beyond the FW 2, UDP communications performed by the communication terminal devices C31, C32 located inside the FW 2 by the action of its relay unit 31 by transmitting and receiving them in TCP simulated communications with the counterpart relay device T4 outside the FW 2. Corresponding thereto, the relay device T4 outside the FW 2 forwards and mediates, beyond the FW 2, the UDP communications by the action of its relay unit 41 by transmitting and receiving them in TCP simulated communications with the relay device T3 inside the FW 2, and forwards and mediates the UDP communications with the relay device T2 outside the FW 1 associated with the other end side of the communications through UDP communication packets.

### [2-3. Forwarding and Mediation of Call Control Message]

Additionally, each relay means T (T1, T2, ...) forwards and mediates call control messages such as SIP and the like by the action of its control unit for calls in accordance with the IP telephone between a communication terminal device local to the FW or a predetermined call control server S and a counterpart relay device installed in opposition across the firewall.

### [2-4. Exemplary Processing]

Consider an example of the processing as described above in connection with a call from the terminal C11 within the FW 1 to the terminal C31 within the FW 2. In this event, an origination request from the terminal C11 is forwarded and mediated to the call control server S by the call control unit 12 of the relay device T1 located inside the FW 1 and the call control unit 22 of the relay device T2 located outside the FW 1 in a bucket relay or a progressive style through a TCP communication. A termination request from the server S based on this origination request is forwarded and mediated to the terminal C31 of the FW 2, which is the destination, by the call control unit 42 of the relay device T4 located outside the FW 2 and the call control unit 32 of the relay device T3 located within the FW 2 in a similar manner.

Then, speech packets based on these call control messages are transmitted, for example, from the terminal C31 within the FW 2 to the call control unit 32 of the relay device T3 --> the call control unit 42 of the relay device T4 --> the call control unit 22 of the relay device T2 --> the relay unit 21 --> the call control unit 12 of the relay device T1 --> the terminal C11 within the FW 1, and FW1, FW2 traversal is carried out through a simulated TCP communication. In this event, when viewed from the call control server S, the (IP addresses of) relay devices T2, T4 outside the respective FW appear to be at both end points of the communication.

Also, for example, in the terminal C11, the call control unit C4 implemented by a control unit thereof such as a CPU or the like, not shown, performs processing including encoding and decoding in response to manipulations such as placement of call made by the user, an arrival response, end of call, and the like in accordance with SIP as an IP telephone terminal, wherein the designations for all of them may be a predetermined port of the relay device T1 located in the same FW 1. Data forwarding and mediation with the necessary call control server S and call partner terminal are performed by the call control unit 12 and relay unit 11 of the relay device T1.

### [2-5. Effects]

According to the embodiment as described above, by forwarding and mediating UDP communications such as VoIP and the like between devices provided inside and outside a firewall thereacross in a TCP simulated (camouflage) communication, easy and secure NAT traversal can be carried out irrespective of the type and setting of firewall and NAT without the need to support a special protocol in communication terminal devices for the IP telephone and the like. The TCP simulated communication simulates a connection of a TCP session for a firewall by an IP header or the like, but actually, packets which records a data section of a UDP communication are sent for forwarding without any subsequent support, without performing an arrival confirmation through a reception confirmation response (ACK) particular to TCP, a re-transmission control through issuance of a re-transmission request and a response, or a congestion control.

Also, in this embodiment, a pair of relay devices across an FW forward and mediate call control messages (for example, an origination request from a terminal inside the FW to the outside, a termination request from the outside of the FW to a terminal inside the FW, and the like) between a communication terminal within the FW and a call control server outside the FW through a normal TCP communication and the like, and speech packets of UDP such as RTP are sent beyond the FW through a TCP simulated communication, thereby making it possible to readily utilize the IP telephone without fail, irrespective of the type and setting of the firewall and NAT.

### [2-6. Conference]

The conference device M essentially performs processing as follows when it mediates a connection of a call among three or more parties in a plurality of terminals. (1) First, the manipulation accepting unit M1 accepts at least manipulations associated with a designation of each participant and a request for start, a response to the request or a call reception response, and a call termination from terminals of participants including the convocator of a conference through the connection unit. (2) The setting unit M2 sets a pair of speech packet transmission paths for an uplink speech collection and a downlink speech delivery by way of a relay device or directly by transmitting and receiving call control information through direct or indirect communications with a predetermined relay device installed in the same FW or a predetermined relay device installed outside of FW for each of terminals of other respective participants located in the same FW and different FWs through the connection unit.

(3) Then, the combiner unit M3 combines speech signals of the respective uplink speeches received from these other participants through addition for each combination of other participants except for one participant among those participants who have set a pair of transmission paths as mentioned above. (4) In addition, the delivery unit M4 delivers the speech signal combined by the combiner M3 to the one terminal through the connection unit. For example, when the terminals C11, C31, C32 are participants, a combination of uplink speeches of the terminals C11 and C31 is delivered to the terminal C32; and a combination of C31 and C32 to C11. The call among three parties or more as described above further expands applicable ranges of the present invention.

### [3. Other Embodiments]

It should be understood that the present invention is not limited to the respective embodiments described above, but also encompass other embodiments which include those illustrated below and others. For example, when terminals which are going to make a call are located within the same FW, i.e., the same LAN, the relay device may mediate the transmission of call control messages and speech packets. Alternatively, a speech packet transmission path may be directly set by a relay device or an SIP server within the FW by exchanging IP addresses and speech packet transmission/reception port numbers between both terminals, after determining that they are within the same LAN, making it possible to avoid the concentration of communication load on the relay device, and effectively avoid instable call quality such as interrupted sound, limitations on the number of simultaneous connections.

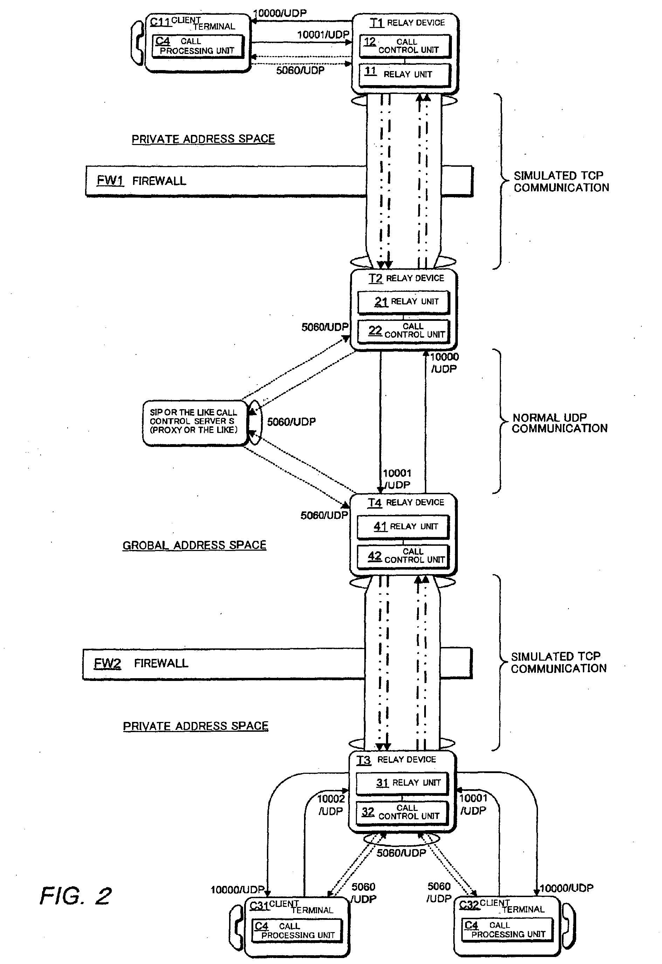

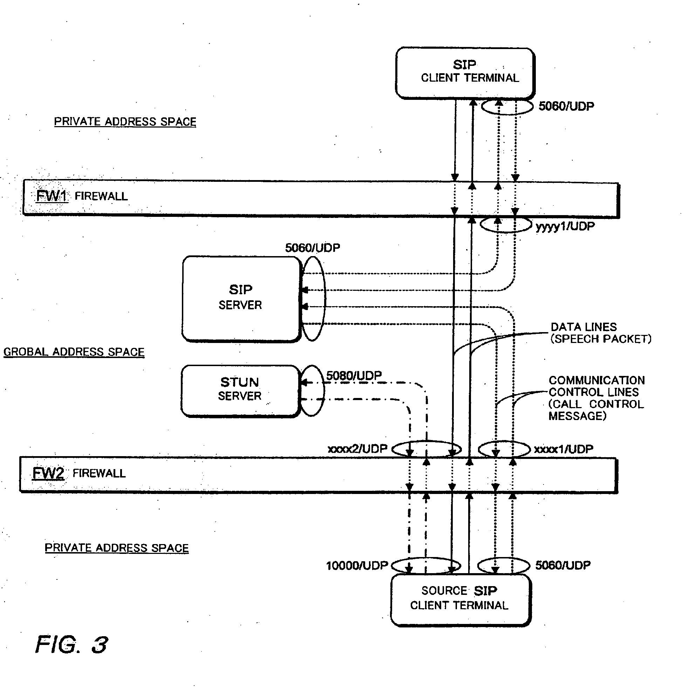

Fig. 2 schematically shows an exemplary use of actual port numbers in the present invention. In this example, each terminal is connected to relay devices T1, T3 in an ordinary VoIP procedure. Specifically, a call control message (broken line) is transmitted and received at a port 5060 of an SIP, and 10000, 10001, 10002 and the like are used as appropriate for RTP speech packets between terminals, whereby a conventional SIP client can be used as a terminal.
Also, since the relay devices T2 , T4 apparently operate as SIP clients, a VoIP communication can be made through a conventional SIP proxy or the like. Call control messages and RTP speech packets can be sent beyond the FW through simulated TCP communications between the relay devices (one-dot chain line and two-dot chain line).

### DESCRIPTION OF REFERENCE NUMERALS

EW1, FW2, FW3 ... Firewalls
T1 - T6 ... Relay Devices
11, 21, 31, 41 ... Relay Units
12, 22, 32, 42 ... Call Control Units
C (C11, C31, C32) ... Terminal Devices (Terminals)
C4 ... Call Processing Unit
S ... Call Control Server

## Claims

1. A relay device comprising a connection with a communication network, and a control unit for performing information processing including a communication through said connection, wherein a pair of said relay devices are installed in opposition to each other across a firewall to carry out a firewall traversal communication between communication addresses, **characterized by** implementing:
relay means for forwarding and mediating a UDP communication performed with a communication address local to said firewall by the action of said control unit by transmitting and receiving the UDP communication in a TCP simulated communication with a counterpart relay device across said firewall.

2. A relay device according to claim 1, **characterized by** implementing call control means for forwarding and mediating a call control message for a call in accordance with an IP telephone by the action of said control unit, between a communication terminal device local to said firewall or a predetermined call control server, and a counterpart relay device installed in opposition across said firewall.

3. A communication system having the relay devices according to claim 1 or 2 inside and outside a firewall, **characterized in that**:
said relay device inside said firewall forwards and mediates a UDP communication performed with a communication address within said firewall beyond said firewall by the action of said relay means thereof by transmitting and receiving the UDP communication in a TCP simulated communication with said relay device outside said firewall; and
said relay device outside said firewall forwards and mediates a UDP communication performed with a communication address outside said firewall beyond said firewall by the action of said relay means thereof by transmitting and receiving the UDP communication in a TCP simulated communication with said relay device inside said firewall.

4. A communication system having the communication system according to claim 3 for each firewall associated with both ends of a communication, **characterized in that**:
said each relay device inside said each firewall forwards and mediates a UDP communication performed by a communication terminal device located inside said each firewall beyond said firewall by the action of said relay means thereof by transmitting and receiving the UDP communication in a TCP simulated communication with said each opposing relay device outside said each firewall; and
said each relay device outside said each firewall forwards and mediates the UDP communication beyond said each firewall by the action of said relay means thereof by transmitting and receiving the UDP communication in a TCP simulated communication with said relay device inside said each firewall, and forwards and mediates the UDP communication with said relay device outside the other firewall associated with the other end of the communication through a UDP communication packet.

5. A method of controlling a relay device comprising a connection with a communication network, and a control unit for performing information processing including a communication through said connection, wherein a pair of said relay devices are installed in opposition to each other across a firewall to carry out a firewall traversal communication between communication addresses,
**characterized by**:
executing relay processing for forwarding and mediating a UDP communication performed with a communication address local to said firewall by the action of said control unit by transmitting and receiving the UDP communication in a TCP simulated communication with a counterpart relay device across said firewall.

6. A method of controlling a relay device according to claim 5, **characterized by** executing call control processing for forwarding and mediating a call control message for a call in accordance with an IP telephone by the action of said control unit, between a communication terminal device local to said firewall or a predetermined call control server, and a counterpart relay device installed in opposition across said firewall.

7. A method of controlling a communication system having the relay devices in the control method according to claim 5 or 6 inside and outside a firewall, **characterized in that**:
said relay device inside said firewall forwards and mediates a UDP communication performed with a communication address within said firewall beyond said firewall through the relay processing thereof by transmitting and receiving the UDP communication in a TCP simulated communication with said relay device outside said firewall; and
said relay device outside said firewall forwards and mediates a UDP communication performed with a communication address outside said firewall beyond said firewall through the relay processing thereof by transmitting and receiving the UDP communication in a TCP simulated communication with said relay device inside said firewall.

8. A method of controlling a communication system having the communication system in the control method according to claim 7 for each firewall associated with both ends of a communication, **characterized in that**:
said each relay device inside said each firewall forwards and mediates a UDP communication performed by a communication terminal device located inside said each firewall beyond said firewall through the relay processing thereof by transmitting and receiving the UDP communication in a TCP simulated communication with said each opposing relay device outside said each firewall; and
said each relay device outside said each firewall forwards and mediates the UDP communication beyond said each firewall through the relay processing thereof by transmitting and receiving the UDP communication in a TCP simulated communication with said relay device inside said each firewall, and forwards and mediates the UDP communication with said relay device outside the other firewall associated with the other end of the communication through a UDP communication packet.

9. A control program for a relay device comprising a connection with a communication network, and a control unit for performing information processing including a communication through said connection, wherein a pair of said relay devices are installed in opposition to each other across a firewall to carry out a firewall traversal communication between communication addresses,
**characterized by**:
causing said control unit to execute relay processing for forwarding and mediating a UDP communication performed with a communication address local to said firewall by transmitting and receiving the UDP communication in a TCP simulated communication with a counterpart relay device across said firewall.

10. A control program for a relay device according to claim 9, **characterized by** causing said control unit to execute call control processing for forwarding and mediating a call control message for a call in accordance with an IP telephone between a communication terminal device local to said firewall or a predetermined call control server, and a counterpart relay device installed in opposition across said firewall.

11. A control program for a communication system having the relay devices in the control program according to claim 9 or 10 inside and outside a firewall, **characterized by**:
causing said control unit of said relay device inside said firewall to forward and mediate a UDP communication performed with a communication address within said firewall beyond said firewall through the relay processing thereof by transmitting and receiving the UDP communication in a TCP simulated communication with said relay device outside said firewall; and
causing said control unit of said relay device outside said firewall to forward and mediate a UDP communication performed with a communication address outside said firewall beyond said firewall through the relay processing thereof by transmitting and receiving the UDP communication in a TCP simulated communication with said relay device inside said firewall.

12. A control program for a communication system having the communication system in the control program according to claim 11 for each firewall associated with both ends of a communication, **characterized by**:
causing said control unit of said each relay device inside said each firewall to forward and mediate a UDP communication performed by a communication terminal device located inside said each firewall beyond said firewall through the relay processing thereof by transmitting and receiving the UDP communication in a TCP simulated communication with said each opposing relay device outside said each firewall; and
causing said control device of said each relay device outside said each firewall to forward and mediate the UDP communication beyond said each firewall by the action of said relay means thereof by transmitting and receiving the UDP communication in a TCP simulated communication with said relay device inside said each firewall, and to forward and mediate the UDP communication with said relay device outside the other firewall associated with the other end of the communication through a UDP communication packet.
